# EUROPEAN PATENT APPLICATION

(11) **EP 4 618 237 A1**
(43) Date of publication of application: **17.09.2025**
(21) Application number: 24196737.1
(22) Date of filing: 27.08.2024
(51) Int. Cl.: H01M 10/48, H01M 10/613, H01M 10/6568, H01M 50/325

(54) **ENERGY STORAGE SYSTEM**

(30) Priority: 12.03.2024 KR 20240034420
(71) Applicant: SAMSUNG SDI CO., LTD., Giheung-gu Yongin-si, Gyeonggi-do 17084 (KR)
(72) Inventor: YOON, Jong Wook, 16678 Suwon-si (KR)
(74) Representative: Marks & Clerk LLP

(57) **Abstract**

The present disclosure provides an energy storage system which includes a case configured to accommodate a cooling fluid, a battery cell in an interior of the case to contact the cooling fluid, a supply port connected to the case for supplying the cooling fluid to the interior of the case, a first discharge port connected to the case for discharging the cooling fluid from the interior of the case, and a second discharge port connected to the case at a lower position than the first discharge port.

## Description

### BACKGROUND

### 1. Field

An aspect of embodiments of the present disclosure relates to an energy storage system.

### 2. Discussion of Related Art

Generally, energy storage systems (ESSs) are devices that can store surplus electricity or electricity produced using renewable energy. An ESS may be formed such that a plurality of battery modules are installed in racks, and such that a plurality of the racks are accommodated in a container. A battery module may be constructed by assembling a plurality of secondary batteries, which are electrically connected to each other, in various structures.

Methods of cooling an energy storage system may be classified into air cooling methods and water cooling methods. Unlike the air cooling methods, which have a large temperature variation between battery cells, and which generate a localized high-temperature section, the water cooling methods have an advantage of enabling target temperature management and efficient cooling control. However, in water-cooled energy storage systems, because battery cells are located inside a closed container, there is a risk that accidents, such as explosions due to excessive increase in internal pressure and the like, may occur if the battery cell ignites.

The above-described information disclosed in the technology that forms the background of the present disclosure is only intended to improve understanding of the background of the present disclosure, and thus may include information that does not constitute the related art.

### SUMMARY

The present disclosure is directed to providing an energy storage system of which the likelihood of accidents caused by an increase in an internal pressure can be reduced or prevented during thermal runaway of a battery cell.

These and other aspects of the present disclosure will be described in or will be apparent from the following description of some embodiments of the present disclosure.

According to an aspect of the present disclosure, there is provided an energy storage system which includes a case configured to accommodate a cooling fluid, a battery cell in an interior of the case to contact, or be immersed in, the cooling fluid, a supply port connected to the case for supplying the cooling fluid to the interior of the case, a first discharge port connected to the case for discharging the cooling fluid from the interior of the case, and a second discharge port connected to the case at a lower position than the first discharge port.

A distance from a bottom surface of the case to the first discharge port may be less than a distance from the bottom surface of the case to an upper surface of the battery cell.

A ratio of the distance from the bottom surface of the case to the first discharge port to the distance from the bottom surface of the case to the upper surface of the battery cell may be between about 0.8 to about 0.9.

A ratio of a distance from a bottom surface of the case to the second discharge port to a distance from the bottom surface of the case to an upper surface of the battery cell may be between about 0.4 to about 0.5.

The supply port may be at a lower position than the second discharge port.

The energy storage system may further include a temperature sensor configured to detect a temperature of the battery cell, and a controller configured to control operations of the supply port, the first discharge port, and the second discharge port based on the temperature of the battery cell.

The controller may be configured to open the first discharge port and close the second discharge port based on the temperature of the battery cell being lower than or equal to a first temperature.

The first temperature may be about 60 °C or higher and about 70 °C or lower.

The controller may be configured to open the second discharge port and close the first discharge port based on the temperature of the battery cell being higher than or equal to a second temperature that is higher than the first temperature.

The second temperature may be about 150 °C or higher and about 200 °C or lower.

The energy storage system may further include a case vent connected to the case and configured to be opened upon an internal pressure of the case being increased to a threshold pressure or higher.

The controller may be configured to open the supply port and close the first discharge port and the second discharge port upon opening of the case vent.

The energy storage system may further include a pressure sensor configured to detect the internal pressure of the case, wherein the controller is configured to determine whether the case vent is opened based on the internal pressure of the case.

The energy storage system may further include a level sensor configured to detect a level of the cooling fluid inside the case, wherein the controller is configured to adjust a flow rate of the cooling fluid into the case through the supply port based on the level of the cooling fluid.

The controller may be configured to adjust the flow rate of the cooling fluid into the case to a first flow rate upon opening of the case vent.

The controller may be configured to adjust the flow rate of the cooling fluid into the case to a second flow rate that is less than the first flow rate upon the level of the cooling fluid being greater than or equal to a distance from a bottom surface of the case to an upper surface of the battery cell.

The first flow rate may be about 3 liters per minute (LPM), wherein the second flow rate is about 1.5 liters per minute (LPM).

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:

The above and other aspects of the present disclosure will become more apparent to those of ordinary skill in the art by describing embodiments thereof in detail with reference to the accompanying drawings, in which:
FIG. 1 is a view schematically illustrating a configuration of an energy storage system according to one or more embodiments of the present disclosure;
FIG. 2 is a perspective view schematically illustrating a configuration of a battery cell according to one or more embodiments of the present disclosure;
FIG. 3 is a cross-sectional view schematically illustrating the configuration of the battery cell according to one or more embodiments of the present disclosure;
FIG. 4 is an enlarged view schematically illustrating a configuration of a supply port, a first discharge port, and a second discharge port according to one or more embodiments of the present disclosure;
FIG. 5 is a view schematically illustrating a configuration of a circulation member according to one or more embodiments of the present disclosure;
FIGS. 6 and 7 are block diagrams schematically illustrating configurations of a temperature sensor and a controller according to one or more embodiments of the present disclosure;
FIGS. 8 and 9 are views schematically illustrating an operation process of the energy storage system according to one or more embodiments of the present disclosure;
FIG. 10 is a view schematically illustrating a configuration of an energy storage system according to one or more other embodiments of the present disclosure;
FIG. 11 is a view schematically illustrating an operation of the energy storage system according to one or more other embodiments of the present disclosure;
FIG. 12 is a view schematically illustrating a configuration of an energy storage system according to still one or more other embodiments of the present disclosure;
FIG. 13 is a block diagram schematically illustrating the configuration of the energy storage system according to still one or more other embodiments of the present disclosure; and
FIGS. 14 to 16 are views schematically illustrating an operation of the energy storage system according to still one or more other embodiments of the present disclosure.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure.

A person of ordinary skill in the art would appreciate, in view of the present disclosure in its entirety, that the present disclosure covers all modifications, equivalents, and replacements within the idea and technical scope of the present disclosure, that each of the features of embodiments of the present disclosure may be combined with each other, in part or in whole, and technically various interlocking and operating are possible, and that each embodiment may be implemented independently of each other, or may be implemented together in an association, unless otherwise stated or implied.

In the drawings, the relative sizes of elements, layers, and regions may be exaggerated for clarity and/or descriptive purposes. Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list. When "C to D" is stated, it means C or more and D or less, unless otherwise specified.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the terms "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

In some embodiments well-known structures and devices may be described in the accompanying drawings in relation to one or more functional blocks (e.g., block diagrams), units, and/or modules to avoid unnecessarily obscuring various embodiments. Those skilled in the art will understand that such block, unit, and/or module are/is physically implemented by a logic circuit, an individual component, a microprocessor, a hard wire circuit, a memory element, a line connection, and other electronic circuits. This may be formed using a semiconductor-based manufacturing technique or other manufacturing techniques. The block, unit, and/or module implemented by a microprocessor or other similar hardware may be programmed and controlled using software to perform various functions discussed herein, optionally may be driven by firmware and/or software. In addition, each block, unit, and/or module may be implemented by dedicated hardware, or a combination of dedicated hardware that performs some functions and a processor (for example, one or more programmed microprocessors and related circuits) that performs a function different from those of the dedicated hardware. In addition, in some embodiments, the block, unit, and/or module may be physically separated into two or more interact individual blocks, units, and/or modules without departing from the scope of the present disclosure. In addition, in some embodiments, the block, unit and/or module may be physically combined into more complex blocks, units, and/or modules without departing from the scope of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

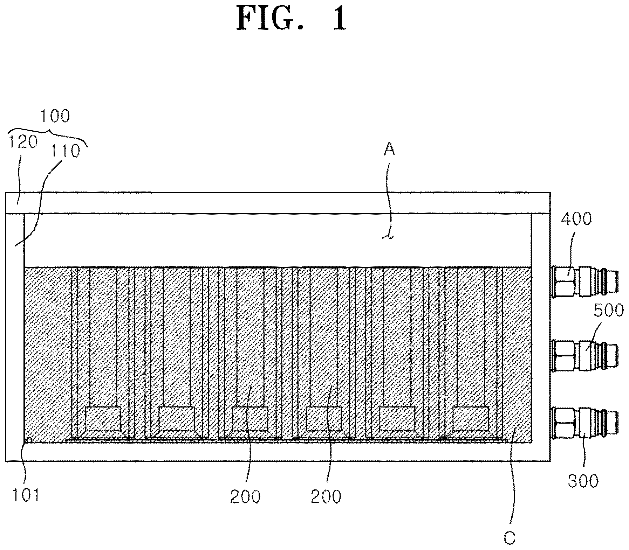

FIG. 1 is a view schematically illustrating a configuration of an energy storage system according to one or more embodiments of the present disclosure.

Referring to FIG. 1, the energy storage system may include a case 100, a battery cell 200, a supply port 300, a first discharge port 400, and a second discharge port 500.

The case 100 may form a schematic appearance of the energy storage system, and may entirely support the battery cell 200, the supply port 300, the first discharge port 400, and the second discharge port 500.

A cooling fluid C may be accommodated inside the case 100. The cooling fluid C may be a fluid capable of cooling the battery cell 200 through heat exchange with the battery cell 200. For example, the cooling fluid C may include at least one of water, Novec^{™} related refrigerant, and non-conductive liquid (Novec^{™} being a registered trademark of 3M Company, Delaware, USA).

The case 100 may include a case body 110 and a cover 120.

The case body 110 may form an exterior of a lower side of the case 100, and may provide a space in which the cooling fluid C is accommodated. For example, the case body 110 may be formed to have the shape of a box with an empty interior and an open upper side. The design of the height, area, and the like of the case body 110 may be variously changed depending on the size, number, and the like of the battery cell 200, which will be described below. The cooling fluid C may be accommodated inside the case body 110 at a height (e.g., predetermined height). The height of the cooling fluid C may be lower than the height of the case body 110. The internal space of the case body 110 may be divided into a region filled with the cooling fluid C, and a chamber A that is unfilled with the cooling fluid C. An interior of the chamber A may be filled with air and with portions of the cooling fluid C whose phase has been changed to a gaseous state.

The cover 120 may form an exterior of an upper side of the case 100, and may allow the internal space of the case body 110 to be opened or closed. The cover 120 may be formed to have the shape of a plate, and may face an upper surface of the case body 110.

The cover 120 may be detachably coupled to the case body 110. For example, the cover 120 may be fixed to the upper surface of the case body 110 by any type of coupling method, such as bolting, welding, fitting, or the like.

The battery cell 200 may function as a unit structure that stores and supplies power in the energy storage system.

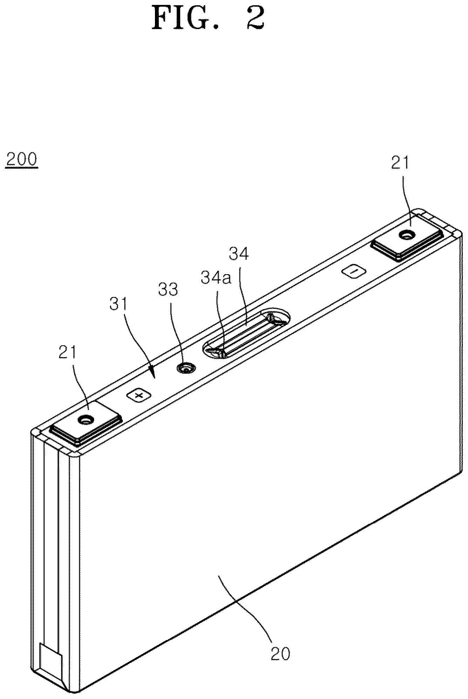

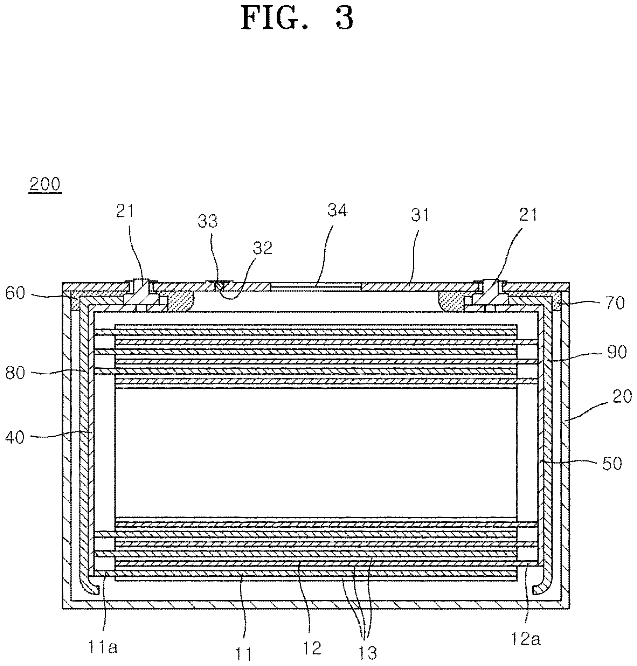

FIG. 2 is a perspective view schematically illustrating a configuration of a battery cell according to one or more embodiments of the present disclosure, and FIG. 3 is a cross-sectional view schematically illustrating the configuration of the battery cell according to one or more embodiments of the present disclosure.

Referring to FIGS. 2 and 3, the battery cell 200 may include at least one electrode assembly in which a positive electrode 11 and a negative electrode 12 are wound with a separator 13, which is an insulator, interposed therebetween, a cell case 20 in which the electrode assembly is embedded, and a cap assembly coupled to/at an opening of the cell case 20.

Hereinafter, an example in which the battery cell 200 is a lithium ion secondary battery and has a prismatic shape will be described. However, the present disclosure is not limited thereto, and the battery cell 200 may be a lithium polymer battery or a cylindrical battery.

The positive electrode 11 and the negative electrode 12 may include coated portions, which are regions where a current collector formed of a thin metal foil is coated with an active material, and uncoated portions 11a and 12a, which are regions where a current collector is not coated with an active material.

As mentioned, the positive electrode 11 and the negative electrode 12 may be wound with the separator 13 therebetween. However, the present disclosure is not limited thereto, and the electrode assembly may be formed to have a structure in which positive electrodes and negative electrodes made of a plurality of sheets are alternately stacked with separators interposed therebetween.

The cell case 20 may form an overall exterior of the battery cell 200, and may be made of a conductive metal, such as aluminum, an aluminum alloy, or nickel-plated steel. Further, the cell case 20 may provide a space in which the electrode assembly is accommodated.

The cap assembly may include a cap plate 31 that covers the opening of the cell case 20. The cell case 20 and the cap plate 31 may be made of a conductive material. A terminal 21 that is electrically connected to the positive electrode 11 or the negative electrode 12 may be installed to pass through the cap plate 31, and may protrude outwardly from the cap plate 31.

Further, the terminal 21 protruding outwardly from the cap plate 31 may be formed as a pair of terminals 21. The pair of terminals 21 may be respectively connected to the positive electrode 11 and the negative electrode 12, and may respectively function as a positive electrode terminal and a negative electrode terminal of the battery cell 200. For example, the terminal 21 may be electrically connected to a current collector including first and second current collectors 40 and 50 (hereinafter referred to as positive and negative electrode current collectors) that are welded and bonded to the positive electrode uncoated portion 11a or the negative electrode uncoated portion 12a. For example, the positive and negative electrode terminals 21 and 22 may be welded and coupled to the positive and negative electrode current collectors 40 and 50. However, the present disclosure is not limited thereto, and the positive and negative electrode terminals 21 and 22 and the positive and negative electrode current collectors 40 and 50 may be formed by being integrally coupled, respectively. An outer peripheral surface of an upper pillar of the terminal 21 may be threaded and fixed to the cap plate 31 with a nut.

However, the present disclosure is not limited thereto, and the terminal 21 may have a rivet structure, and may be rivet-coupled to the cap plate 31 or may be coupled to the cap plate 31 by welding.

Further, the cap plate 31 may be formed to have a thin plate, and may be coupled to, or at, the opening of the cell case 20. In the cap plate 31, an electrolyte injection port 32, in which a sealing stopper 33 can be installed, may be formed, and a vent 34, in which a notch is formed, may be installed.

The vent 34 may be opened or closed in response to a change in internal pressure of the cell case 20. The vent 34 may be maintained in a closed state, and may seal the cell case 20 during normal operation of the electrode assembly. If the internal pressure of the cell case 20 is increased to a threshold value (e.g., set value) or more due to overcharging, a fire, etc., the vent 34 may be opened, and may allow emissions such as a flame, gas, and the like to be discharged from the interior of the cell case 20 to the outside of the cell case 20.

Further, an insulation member may be installed between the electrode assembly and the cap plate 31. The insulation member may include first and second lower insulation members 60 and 70. Each of the first and second lower insulation members 60 and 70 may be installed between the electrode assembly and the cap plate 31.

Further, one end of a separation member that may be installed to face one side surface of the electrode assembly may be installed between the insulation member and the terminal 21.

The separation member may include first and second separation members 80 and 90.

Therefore, one ends of the first and second separation members 80 and 90, which may be installed to face one side surface of the electrode assembly, may be respectively installed between the first and second lower insulation members 60 and 70 and the positive and negative electrode terminals 21 and 22.

Eventually, the terminals 21 respectively welded and coupled to the positive and negative electrode current collectors 40 and 50 may be respectively coupled to the first and second lower insulation members 60 and 70 and to one ends of the first and second separation members 80 and 90.

The battery cell 200 may be inside the case 100 (e.g., inside the case body 110). If the cooling fluid C is accommodated inside the case 100, the battery cell 200 may be immersed in the cooling fluid C. The battery cell 200 may be inside the case body 110 so that the vent 34 faces upward. The vent 34 may be positioned to be coplanar with an upper surface of the battery cell 200. A lower surface of the battery cell 200 may be in contact with a bottom surface 101 of the case 100 (e.g., see FIG. 1). The bottom surface 101 of the case 100 may have the same configuration as a bottom surface of the case body 110.

The battery cell 200 may be provided as a plurality of battery cells 200. The plurality of battery cells 200 may be arranged in a plurality of columns inside the case body 110 in a width direction of the case body 110. Hereinafter, an example in which the plurality of battery cells 200 are arranged in two rows in the width direction of the case body 110 will be described. A plurality of battery cells 200 provided in any one row may be arranged in a row in a longitudinal direction of the case body 110.

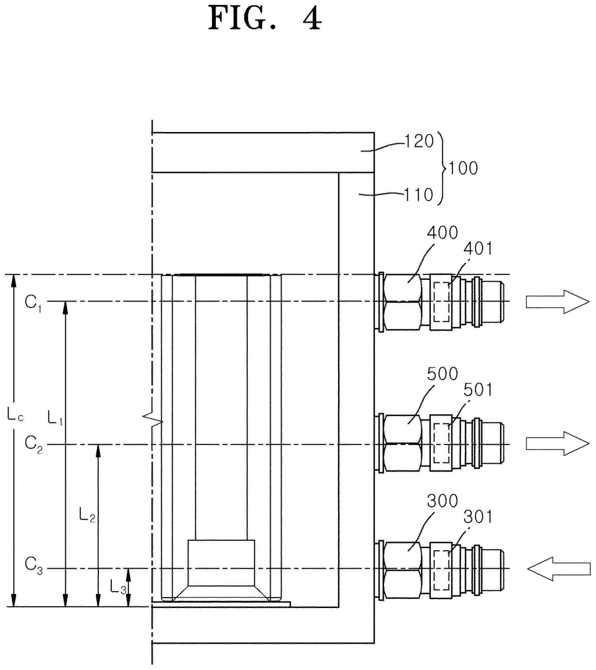

FIG. 4 is an enlarged view schematically illustrating a configuration of a supply port 300, a first discharge port 400, and a second discharge port 500 according to one or more embodiments of the present disclosure.

Referring to FIG. 4, the supply port 300 may be connected to the case 100, and may allow the cooling fluid C to be supplied to an interior of the case 100. The supply port 300 may be formed to have the shape of a pipe with an empty interior and with both sides being open. One side of the supply port 300 may be connected to the case 100 (e.g., connected to a side surface of the case body 110), and may communicate with an internal space of the case 100. The other side of the supply port 300 may protrude to the outside of the case 100. A longitudinal direction of the supply port 300 may be parallel to the ground.

The supply port 300 may be provided to be opened or closed. For example, the supply port 300 may include a supply valve 301 that opens or closes the internal space of the supply port 300. If the internal space of the supply port 300 is opened, the supply valve 301 may allow the cooling fluid C to be transferred from the supply port 300 to the internal space of the case 100. The supply valve 301 may adjust a flow rate of the cooling fluid C supplied to the internal space of the case 100 by varying an open area of the internal space of the supply port 300. If the internal space of the supply port 300 is closed, the supply valve 301 may block the cooling fluid C from being transferred from the supply port 300 to the internal space of the case 100. Examples of the supply valve 301 may include any type of electronic valve that may open or close the internal space of the supply port 300 in response to an electrical signal or the like applied from the outside, i.e. automatically open or close the internal space of the supply port 300 by an electrical signal or the like applied from the outside. In one or more alternative embodiments, examples of the supply valve 301 may include any type of manual valve that may open or close the internal space of the supply port 300 through manual operation by an operator.

The first discharge port 400 may be connected to the case 100, and may allow the cooling fluid C to be discharged from the interior of the case 100.

One side of the first discharge port 400 may be connected to the case 100 (e.g., connected to the side surface of the case body 110), and may communicate with the internal space of the case 100. The other side of the first discharge port 400 may protrude to the outside of the case 100. The first discharge port 400 may be substantially parallel to the supply port 300.

The first discharge port 400 may be provided to be opened or closed. For example, the first discharge port 400 may include a first discharge valve 401 that opens or closes the internal space of the first discharge port 400. If the internal space of the first discharge port 400 is opened, the first discharge valve 401 may allow the cooling fluid C to be transferred from the internal space of the case 100 to the first discharge port 400. The first discharge valve 401 may adjust a flow rate of the cooling fluid C discharged from the case 100 by varying an open area of the internal space of the first discharge port 400. If the internal space of the first discharge port 400 is closed, the first discharge valve 401 may block the cooling fluid C from being transferred from the internal space of the case 100 to the first discharge port 400. Examples of the first discharge valve 401 may include any type of electronic valve that may open or close the internal space of the first discharge port 400 in response to an electrical signal or the like applied from the outside, i.e. automatically open or close the internal space of the supply port 300 by an electrical signal or the like applied from the outside. In one or more alternative embodiments, examples of the first discharge valve 401 may include any type of manual valve that may open or close the internal space of the first discharge port 400 through manual operation by an operator.

A distance L₁ from the bottom surface 101 of the case 100 to the first discharge port 400 may be less than a distance L_{c} from the bottom surface 101 of the case 100 to the upper surface of the battery cell 200. The distance L₁ from the bottom surface 101 of the case 100 to the first discharge port 400 may be a vertical distance from the bottom surface 101 of the case 100 to a central axis C₁ of the first discharge port 400 (e.g., see FIG. 4). Further, the distance L_{c} may be a vertical distance from the bottom surface 101 of the case 100 to the upper surface of the battery cell 200.

A ratio L₁/L_{c} of the distance L₁ from the bottom surface 101 of the case 100 to the first discharge port 400 to the distance L_{c} from the bottom surface 101 of the case 100 to the upper surface of the battery cell 200 may range from about 0.8 to about 0.9. The central axis C₁ of the first discharge port 400 may be located at a position at about 80% to about 90% of the height of the battery cell 200. Even if the first discharge port 400 is opened for circulation of the cooling fluid C, a level of the cooling fluid C may be maintained at about 80% to about 90% of the height of the battery cell 200, and the battery cell 200 may be cooled with sufficient efficiency.

The second discharge port 500 may be connected to the case 100, and may allow the cooling fluid C to be discharged from the interior of the case 100 independently of the first discharge port 400. One side of the second discharge port 500 may be connected to the case 100 (e.g., connected to the side surface of the case body 110), and may communicate with the internal space of the case 100. The other side of the second discharge port 500 may protrude to the outside of the case 100. The second discharge port 500 may be substantially parallel to the supply port 300.

The second discharge port 500 may be provided to be opened or closed. For example, the second discharge port 500 may include a second discharge valve 501 that opens or closes an internal space of the second discharge port 500. If the internal space of the second discharge port 500 is opened, the second discharge valve 501 may allow the cooling fluid C to be transferred from the internal space of the case 100 to the second discharge port 500. The second discharge valve 501 may adjust the flow rate of the cooling fluid C discharged from the case 100 by varying an open area of the internal space of the second discharge port 500. If the internal space of the second discharge port 500 is closed, the second discharge valve 501 may block the cooling fluid C from being transferred from the internal space of the case 100 to the second discharge port 500. Examples of the second discharge valve 501 may include any type of electronic valve that may open or close the internal space of the second discharge port 500 in response to an electrical signal or the like applied from the outside. In one or more alternative embodiments, examples of the second discharge valve 501 may include any type of manual valve that may open or close the internal space of the second discharge port 500 through manual operation by an operator.

The second discharge port 500 may be at a lower position than the first discharge port 400. For example, a ratio L₂/L_{c} of a distance L₂ from the bottom surface 101 of the case 100 to the second discharge port 500 to the distance L_{c} from the bottom surface 101 of the case 100 to the upper surface of the battery cell 200 may range from about 0.4 to about 0.5. The distance L₂ from the bottom surface 101 of the case 100 to the second discharge port 500 may be a distance from the bottom surface 101 of the case 100 to a central axis C₂ of the second discharge port 500. The central axis C₂ of the second discharge port 500 may be located at a position at about 40% to about 50% of the height of the battery cell 200. If a temperature of the battery cell 200 is increased, the second discharge port 500 may be opened, and the level of the cooling fluid C may be lowered to about 40% to about 50% of the height of the battery cell 200. The second discharge port 500 may expand the volume of the chamber A before thermal runaway of the battery cell 200 occurs. The second discharge port 500 may reduce or prevent damage to the case 100 that may be caused by an excessive increase in the internal pressure of the chamber A if the thermal runaway of the battery cell 200 occurs.

The supply port 300 may be at a lower position than the second discharge port 500. For example, a distance L₃ from the bottom surface 101 of the case 100 to the supply port 300 may be less than the distance L₂ from the bottom surface 101 of the case 100 to the second discharge port 500. The distance L₃ from the bottom surface 101 of the case 100 to the supply port 300 may be a distance from the bottom surface 101 of the case 100 to a central axis C₃ of the supply port 300. A temperature of the supply port 300 may be increased through heat exchange with the battery cell 200, and the supply port 300 may guide the cooling fluid C moved upward to be rapidly introduced into the first discharge port 400 or the second discharge port 500.

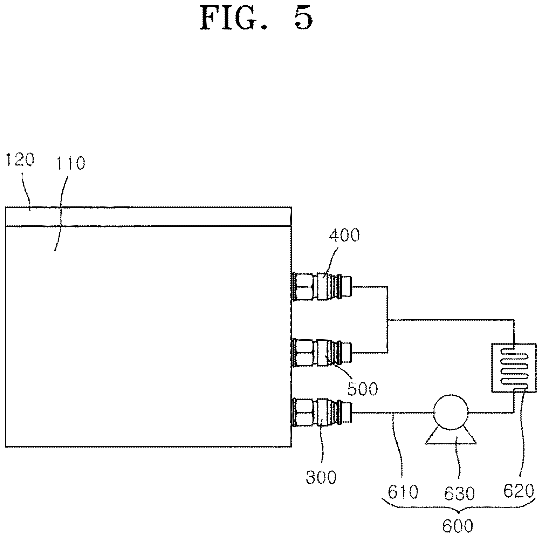

FIG. 5 is a view schematically illustrating a configuration of a circulation member according to one or more embodiments of the present disclosure.

Referring to FIG. 5, the energy storage system may further include a circulation member 600. The circulation member 600 may function as a component that circulates the cooling fluid C supplied to or discharged from the case 100. The circulation member 600 may include a circulation line 610, a chiller 620, and a pump 630.

The circulation line 610 may be connected to the supply port 300, the first discharge port 400, and the second discharge port 500, and may guide the flow of the cooling fluid C outside the case 100. The circulation line 610 may be formed to have the shape of a pipe with an empty interior. One end portion of the circulation line 610 may be connected to the other side of the supply port 300 protruding to the outside of the case 100, and may communicate with the internal space of the supply port 300. The other end portion of the circulation line 610 may be connected to the other side of the first discharge port 400 and/or second discharge port 500 protruding to the outside of the case 100, and may communicate with the internal space of the first discharge port 400 and/or second discharge port 500. The other end portion of the circulation line 610 may be branched off into a pair of portions, and the pair of portions may be individually connected to the first discharge port 400 and the second discharge port 500. In one or more embodiments, a storage tank that stores the cooling fluid C, and that replenishes the cooling fluid C in the circulation line 610, or that recovers the cooling fluid C from the circulation line 610, may be connected to the circulation line 610.

The chiller 620 may be connected to the circulation line 610, and may cool the cooling fluid C flowing through the circulation line 610. Examples of the chiller 620 may include any type of heat exchange device that may cool the cooling fluid C flowing through the circulation line 610 through heat exchange with external air or a separate refrigerant.

The pump 630 may be connected to the circulation line 610, and may flow, or pump, the cooling fluid C introduced into the circulation line 610 from the first discharge port 400 and/or the second discharge port 500 toward the supply port 300. Examples of the pump 630 may include any type of power unit that may receive power from the outside, and may provide flow force to the cooling fluid C flowing through the circulation line 610.

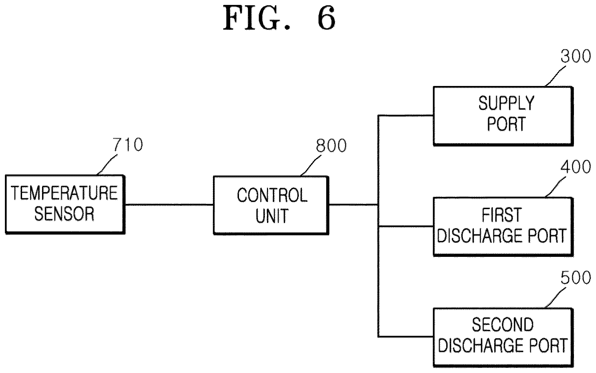

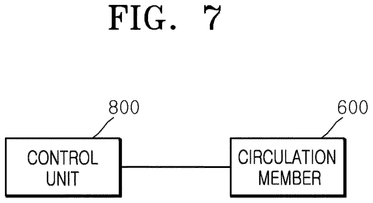

FIGS. 6 and 7 are block diagrams schematically illustrating configurations of a temperature sensor and a controller according to one or more embodiments of the present disclosure.

Referring to FIGS. 6 and 7, the energy storage system may further include a temperature sensor 710 and a controller (e.g., control unit) 800.

The temperature sensor 710 may include any type of detection unit that may detect the temperature of the battery cell 200, such as a thermistor, an infrared sensor, etc. The temperature sensor 710 may be inside or outside the case 100 of the energy storage system. The temperature sensor 710 may individually detect the temperatures of the plurality of battery cells 200.

The controller 800 may generally control the operations of the supply port 300, the first discharge port 400, and the second discharge port 500.

For example, the controller 800 may open or close the supply port 300, the first discharge port 400, and the second discharge port 500 on the basis of data detected by the temperature sensor 710. For example, the controller 800 may control the operations of the supply valve 301, the first discharge valve 401, and/or the second discharge valve 501 to individually open or close the supply port 300, the first discharge port 400, and/or the second discharge port 500. The controller 800 may control the operations of the supply valve 301, the first discharge valve 401, and/or the second discharge valve 501 to block the flow of the cooling fluid C passing through the supply port 300, the first discharge port 400, and/or the second discharge port 500, or to adjust the size of the flow rate of the cooling fluid C passing through the supply port 300, the first discharge port 400, and/or the second discharge port 500.

Referring to FIG. 7, the controller 800 may be connected to the circulation member 600, and may control the operation of the circulation member 600. For example, the controller 800 may control the on/off or the output of the pump 630 to adjust the size of the flow rate of the cooling fluid C passing through the supply port 300, the first discharge port 400, and/or the second discharge port 500.

The controller 800 may be implemented as an electronic control unit (ECU), a central processing unit (CPU), a processor, or a system on chip (SoC), may control a plurality of hardware or software components by running an operating system or application, and may process and calculate various pieces of data. The controller 800 may be configured to execute at least one command stored in a memory, and may store result data of the execution in the memory.

The controller 800 may include a communication device that may establish a communication connection with an external server or another controller 800, and may transmit or receive data through the established communication connection. The communication device may be implemented as a device that performs a wireless communication connection through any one of a Bluetooth^{®} communication method, a Wi-Fi^{®} communication method, a ZigBee^{®} communication method, and a near-field communication (NFC) method, or a device that performs wired communications via cables and the like (Bluetooth^{®} being a registered trademark of Bluetooth Sig, Inc., Kirkland, WA, Wi-Fi^{®} being a registered trademark of the non-profit Wi-Fi Alliance, and ZigBee^{®} being a registered trademark of Connectivity Standards Alliance, CA).

Hereinafter, the operation of the energy storage system according to one or more embodiments of the present disclosure will be described.

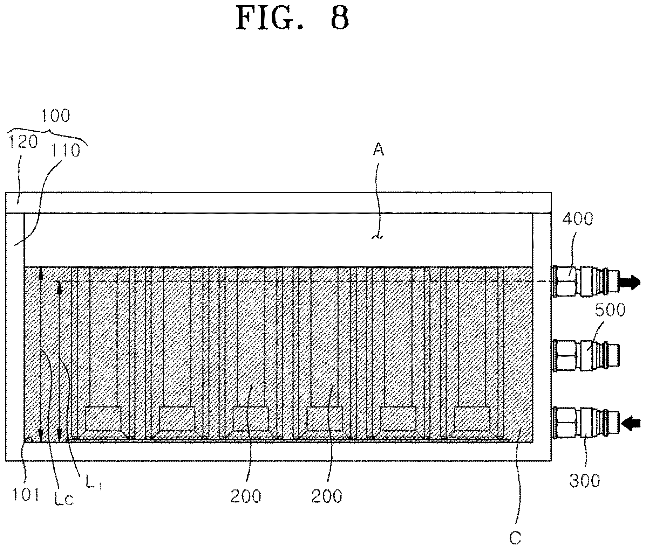

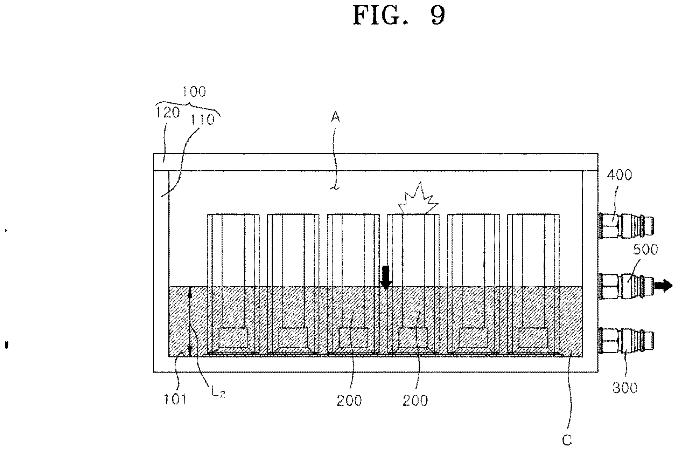

FIGS. 8 and 9 are views schematically illustrating an operation process of the energy storage system according to one or more embodiments of the present disclosure.

Referring to FIG. 8, if the battery cell 200 is operating normally, the controller 800 may open the first discharge port 400.

The controller 800 may determine whether the battery cell 200 is operating normally on the basis of a value of the temperature of the battery cell 200 detected by the temperature sensor 710.

For example, if the temperature of the battery cell 200 is lower than or equal to a first temperature (e.g., first set temperature), the controller 800 may determine that the battery cell 200 is operating normally. In one or more embodiments in which the battery cell 200 is formed as a plurality of battery cells 200, if the temperatures of all the plurality of battery cells 200 are lower than or equal to the first temperature, the controller 800 may determine that the battery cells 200 are operating normally. The first temperature may be about 60 °C or higher and about 70 °C or lower.

If it is determined that the battery cell 200 is operating normally, the controller 800 may open the first discharge port 400 and close the second discharge port 500. In this case, the controller 800 may open the supply port 300.

The cooling fluid C may be supplied into the case 100 through the supply port 300, discharged from the case 100 through the first discharge port 400, and circulated.

If the ratio L₁/L_{c} of the distance L₁ from the bottom surface 101 of the case 100 to the first discharge port 400 to the distance L_{c} from the bottom surface 101 of the case 100 to the upper surface of the battery cell 200 is set to about 0.8 to about 0.9, the level of the cooling fluid C may be maintained at about 80% or more of the height of the battery cell 200. The first discharge port 400 may reduce or prevent degradation of the cooling performance of the battery cell 200.

If the temperature of the battery cell 200 is higher than or equal to a second temperature (e.g., second set temperature), the controller 800 may determine that the battery cell 200 is operating abnormally. In one or more embodiments in which the battery cell 200 is formed as a plurality of battery cells 200, if the temperature of any one of the plurality of battery cells 200 is higher than or equal to the second temperature, the controller 800 may determine that the battery cells 200 are operating abnormally. The second temperature may be about 150 °C or higher and about 200 °C or lower.

If it is determined that the battery cell 200 is operating abnormally, the controller 800 may open the second discharge port 500, and may close the first discharge port 400. In this case, the controller 800 may open the supply port 300.

Because the second discharge port 500 is located at a lower position than the first discharge port 400, if the second discharge port 500 is opened, the level of the cooling fluid C may be lowered.

For example, if the ratio L₂/L_{c} of the distance L₂ from the bottom surface 101 of the case 100 to the second discharge port 500 to the distance L_{c} from the bottom surface 101 of the case 100 to the upper surface of the battery cell 200 is set to about 0.4 to about 0.5, the level of the cooling fluid C may be lowered to about 50% or less of the height of the battery cell 200.

The controller 800 may reduce the level of the cooling fluid C, and may expand the volume of the chamber A before thermal runaway of the battery cell 200 occurs. The controller 800 may reduce or prevent damage to the case 100 by reducing an increase in an internal pressure of the case 100 caused by gas or the like discharged from the vent 34 if the thermal runaway of the battery cell 200 occurs.

Hereinafter, an energy storage system according to one or more other embodiments of the present disclosure will be described.

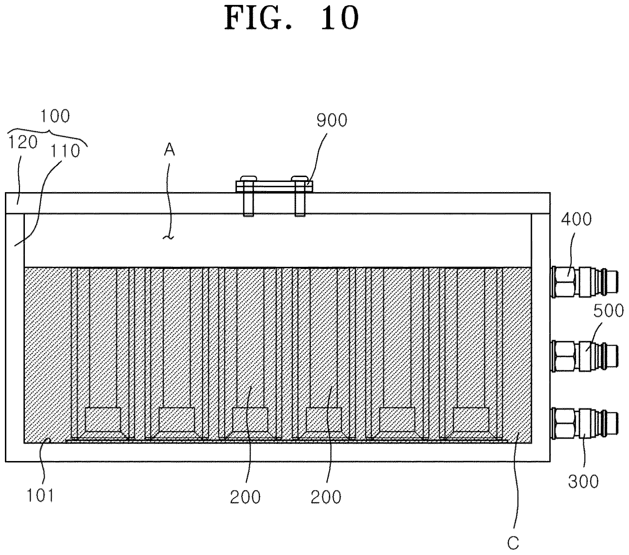

FIG. 10 is a view schematically illustrating a configuration of the energy storage system according to one or more other embodiments of the present disclosure.

Referring to FIG. 10, the energy storage system may be configured to further include a case vent 900 in the energy storage system according to one or more embodiments of the present disclosure described with reference to FIGS. 1 to 9.

In describing the energy storage system, only the case vent 900 that was not described in the energy storage system according to one or more embodiments of the present disclosure will be described below.

The description of the energy storage system according to one or more embodiments of the present disclosure may be directly applied to the remaining components of the energy storage system according to embodiments of the present disclosure.

The case vent 900 may be connected to the case 100, and may be opened if the internal pressure of the case 100 (e.g., the pressure of the chamber A) is increased to a corresponding pressure or higher. If the case vent 900 is opened, the chamber A may communicate with the external space of the case 100. In one or more embodiments, the case vent 900 may function as a component that provides a path through which a gas, smoke, a flame, etc., emitted from the battery cell 200 is discharged to the outside of the case 100 if thermal runaway of the battery cell 200 occurs. The design of the threshold pressure (e.g., set pressure) at which the case vent 900 is opened may be variously changed within a range in which the threshold pressure is less than the internal pressure of the chamber A at which the case body 110 and the cover 120 rupture. If the internal pressure of the chamber A is increased due to the thermal runaway of the battery cell 200, the case vent 900 may rupture prior to a time point at which the case 100 ruptures, thereby reducing or preventing damage to the case 100.

For example, the case vent 900 may be installed on an upper side of the case 100 (e.g., the cover 120). If the internal pressure of the chamber A is lower than or equal to the threshold pressure, the case vent 900 may be maintained in a closed state and may seal the chamber A. If the internal pressure of the chamber A is increased to the threshold pressure or higher, the case vent 900 may rupture itself and may open the chamber A. In one or more embodiments, the case vent 900 may include a notch formed to have a thickness that is less than that of the case body 110 and the cover 120, or formed to guide rupture, so that the case vent 900 can rupture at a pressure that is less than the internal pressure of the chamber A at which the case body 110 and the cover 120 rupture.

Hereinafter, the operation of the energy storage system according to one or more other embodiments of the present disclosure will be described.

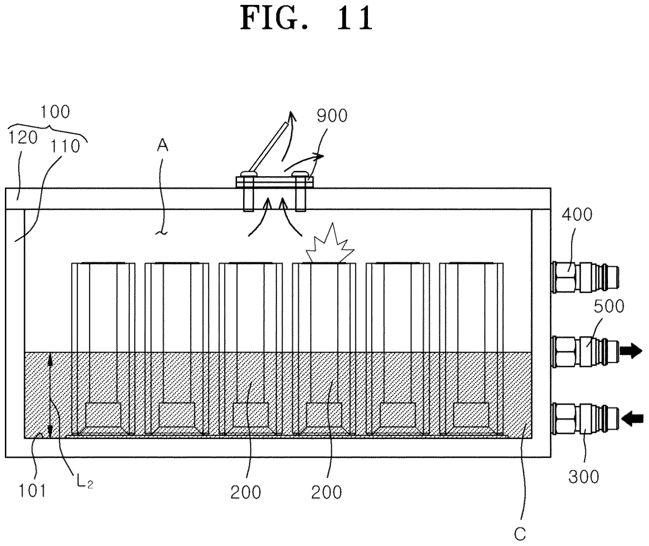

FIG. 11 is a view schematically illustrating an operation of the energy storage system according to one or more other embodiments of the present disclosure.

Referring to FIGS. 9 and 11, prior to potential explosion of the battery cell 200, the controller 800 may open the second discharge port 500 to lower the level of the cooling fluid C, and to increase the volume of the chamber A.

Due to such an increase in the volume of the chamber A, if the battery cell 200 explodes, the increase in the internal pressure of the chamber A may be reduced.

However, if the explosion pressure of the battery cell 200 is higher than expected, or if a plurality of battery cells 200 explode in succession, the pressure of the chamber A may be increased more than or equal to the rupture pressure of the case 100 even if the second discharge port 500 is opened.

In this situation, if the pressure of the chamber A is increased to the threshold pressure or higher, the case vent 900 may form a path through which the case vent 900 ruptures prior to the case 100, and the gas or the like emitted from the battery cell 200 is discharged from the chamber A.

The gas emitted from the battery cell 200 may be discharged to the outside of the case 100, and the pressure of the chamber A may be lowered to the threshold pressure or lower.

Hereinafter, an energy storage system according to still one or more other embodiments of the present disclosure will be described.

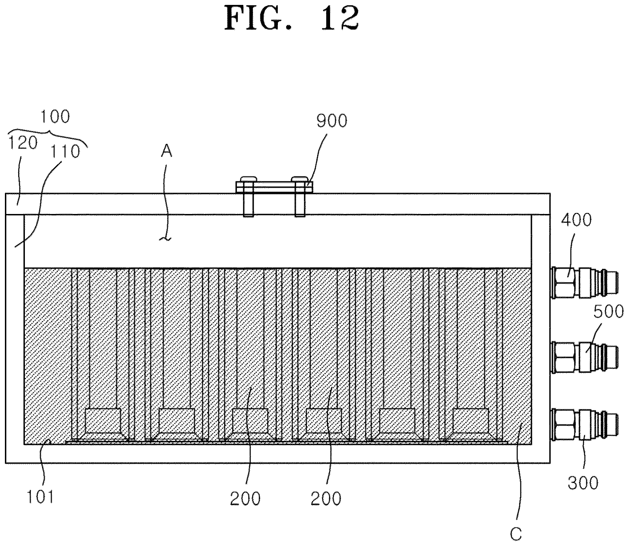

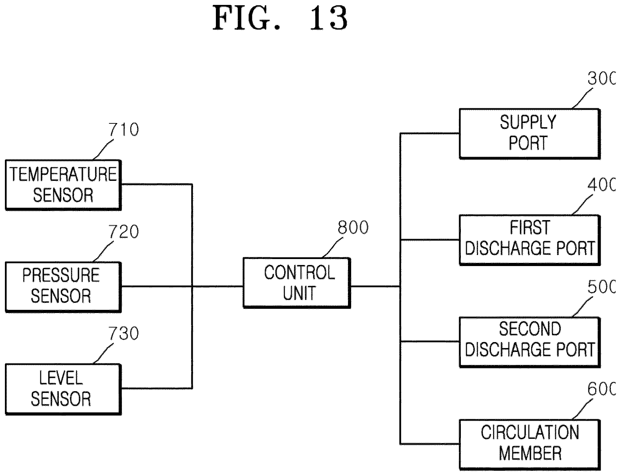

FIG. 12 is a view schematically illustrating a configuration of an energy storage system according to still one or more other embodiments of the present disclosure, and FIG. 13 is a block diagram schematically illustrating the configuration of the energy storage system according to still one or more other embodiments of the present disclosure.

Referring to FIGS. 12 and 13, the energy storage system may be configured to further include a pressure sensor 720 and a level sensor 730 in the energy storage system according to one or more other embodiments of the present disclosure described with reference to FIGS. 10 and 11.

In describing the energy storage system, only the operations of the pressure sensor 720, the level sensor 730, and the controller 800 communicating therewith, which were not already described above, will be described below.

The pressure sensor 720 may include any type of detection unit that may detect the internal pressure of the case 100 (e.g., the pressure of the chamber A), such as a strain gauge, a capacitive pressure sensor, a potentiometric pressure sensor, a piezoelectric pressure sensor, a silicon pressure sensor, etc. The pressure sensor 720 may be inside or outside the case 100.

The level sensor 730 may include any type of detection unit that may detect the level of the cooling fluid C, such as an ultrasonic level sensor, a microwave level sensor, a capacitive level sensor, a pressure type level sensor, etc. The level sensor 730 may detect the level of the cooling fluid C continuously or intermittently. The level sensor 730 may be inside or outside the case 100.

The controller 800 may determine whether the case vent 900 is opened on the basis of data detected by the pressure sensor 720.

If it is determined that the case vent 900 is opened, the controller 800 may control the operations of the supply port 300, the first discharge port 400, the second discharge port 500, and the circulation member 600 on the basis of data detected by the level sensor 730 to adjust the flow rate of the cooling fluid C supplied into the case 100, and may raise the level of the cooling fluid C. The controller 800 may realize fire suppression performance by raising the level of the cooling fluid C if thermal runaway of the battery cell 200 occurs.

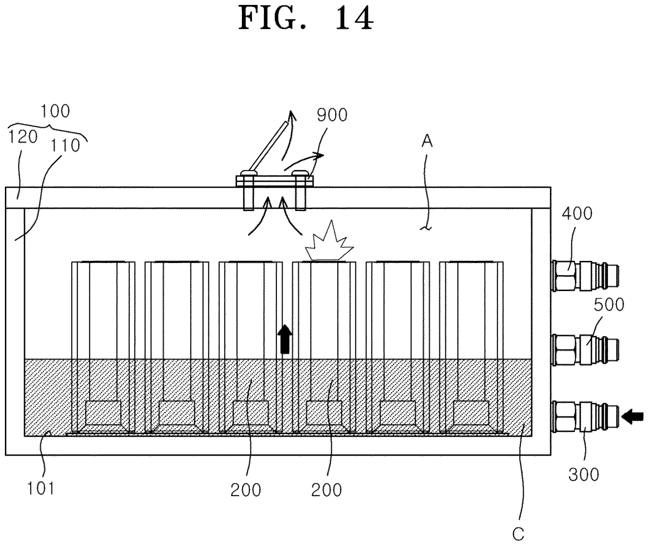

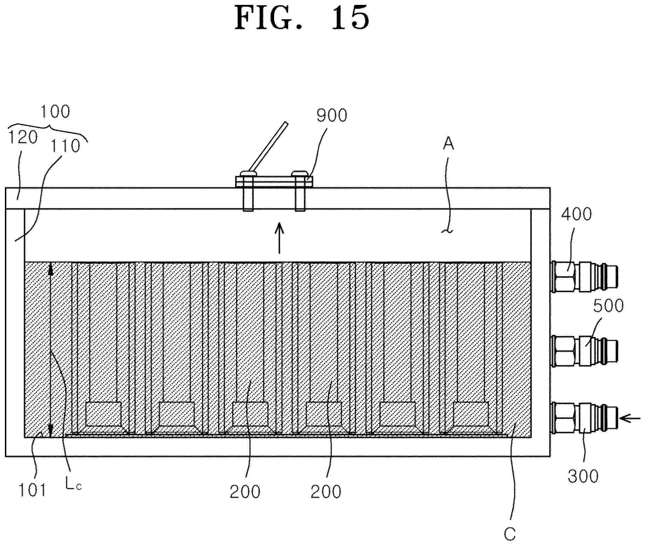

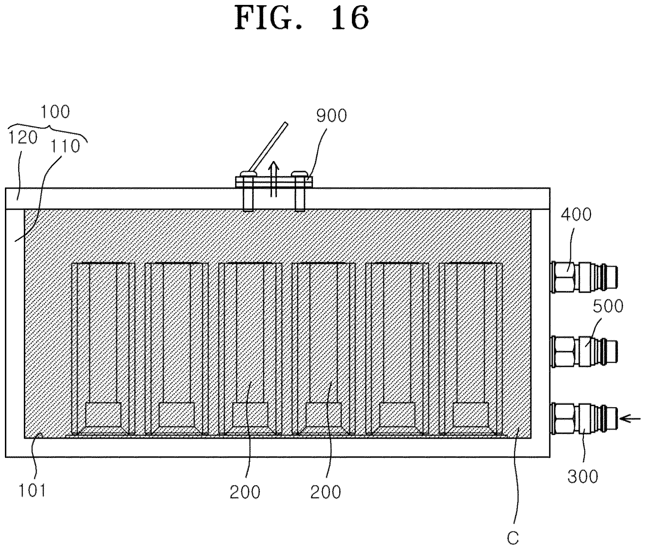

FIGS. 14 to 16 are views schematically illustrating an operation of the energy storage system according to still one or more other embodiments of the present disclosure.

The operations illustrated in FIGS. 14 to 16 may be performed after the operations described in FIGS. 8, 9, and 11 are performed (e.g., performed sequentially).

Before and after opening the case vent 900, the pressure sensor 720 detects the internal pressure of the case 100 (e.g., the pressure of the chamber A).

The pressure value detected by the pressure sensor 720 may reach a threshold pressure (e.g., set pressure) before the case vent 900 is opened, and then may decrease to a pressure that is lower than the threshold pressure after the case vent 900 is opened.

In this way, if the pressure value detected by the pressure sensor 720 decreases after reaching the threshold pressure, the controller 800 may determine that the case vent 900 is opened.

If it is determined that the case vent 900 is opened, the controller 800 may open the supply port 300, and may close the first discharge port 400 and the second discharge port 500 to raise the level of the cooling fluid C.

In this process, the controller 800 may adjust the flow rate of the cooling fluid C supplied into the case 100 through the supply port 300 on the basis of the data detected by the level sensor 730.

For example, if the case vent 900 is opened, the controller 800 may adjust the flow rate of the cooling fluid C supplied into the case 100 through the supply port 300 to a first flow rate. In this case, the controller 800 may adjust the flow rate of the cooling fluid C supplied into the case 100 to the first flow rate by controlling the operation of the supply valve 301 or the operation of the pump 630. The first flow rate may be, for example, about 3 liters per minute (LPM). The controller 800 may control the flow rate of the cooling fluid C supplied into the case 100 in real time on the basis of data detected by a flow rate sensor separately installed in the case 100 or supply port 300, in one or more embodiments.

Thereafter, if the level of the cooling fluid C raises to the distance L_{c} from the bottom surface 101 of the case 100 to the upper surface of the battery cell 200, the cooling fluid C may be introduced into the vent 34, and may extinguish a fire in the battery cell 200.

If the level of the cooling fluid C raises to the distance L_{c} or higher from the bottom surface 101 of the case 100 to the upper surface of the battery cell 200, the controller 800 may adjust the flow rate of the cooling fluid C supplied into the case 100 through the supply port 300 from the first flow rate to a second flow rate. The second flow rate may be less than the first flow rate. For example, the second flow rate may be about 1.5 LPM.

At the beginning of an explosion of the battery cell 200, the controller 800 may relatively increase the flow rate of the cooling fluid C supplied into the case 100 to rapidly extinguish the fire in the battery cell 200.

Further, after a time point at which the cooling fluid C is introduced into the vent 34, the controller 800 may relatively reduce the flow rate of the cooling fluid C supplied into the case 100 to reduce the amount of loss of the cooling fluid C discharged to the outside of the case 100 through the case vent 900, and may increase the time for which the cooling fluid C remains inside the case 100 to improve the fire suppression efficiency.

According to embodiments of the present disclosure, a first discharge port and a second discharge port that discharge a cooling fluid from a case are located at different heights, and states thereof are individually adjusted to be open and closed states depending on whether a battery cell is operating normally, and thus it is possible to reduce or prevent degradation of the cooling efficiency of the battery cell during normal operation of the battery cell, and may reduce an increase in internal pressure of the case to reduce or prevent damage to the case during thermal runaway of the battery cell.

According to embodiments of the present disclosure, a case vent can reduce or prevent the likelihood of the internal pressure of the case from being increased more than or equal to a rupture pressure of the case during thermal runaway of the battery cell.

According to embodiments of the present disclosure, if the case vent is opened, it is possible to extinguish a fire using the cooling fluid by raising a level of the cooling fluid.

According to embodiments of the present disclosure, at the beginning of the explosion of the battery cell, by relatively increasing a flow rate of the cooling fluid supplied into the case, a fire in the battery cell can be rapidly extinguished.

According to embodiments of the present disclosure, after a time point at which the cooling fluid is introduced into a vent, by relatively reducing the flow rate of the cooling fluid supplied into the case, the amount of loss of the cooling fluid discharged to the outside of the case through the case vent can be reduced, and the time for which the cooling fluid remains inside the case can be increased, thereby improving the fire suppression efficiency.

However, the aspects obtainable through the present disclosure are not limited to the above aspects, and other aspects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. An energy storage system comprising:
a case configured to accommodate a cooling fluid;
a battery cell in an interior of the case to contact the cooling fluid;
a supply port connected to the case for supplying the cooling fluid to the interior of the case;
a first discharge port connected to the case for discharging the cooling fluid from the interior of the case; and
a second discharge port connected to the case at a lower position than the first discharge port.

2. The energy storage system as claimed in claim 1, wherein a distance from a bottom surface of the case to the first discharge port is less than a distance from the bottom surface of the case to an upper surface of the battery cell.

3. The energy storage system as claimed in claim 2, wherein a ratio of the distance from the bottom surface of the case to the first discharge port to the distance from the bottom surface of the case to the upper surface of the battery cell is between about 0.8 to about 0.9.

4. The energy storage system as claimed in any one of the preceding claims, wherein a ratio of a distance from a bottom surface of the case to the second discharge port to a distance from the bottom surface of the case to an upper surface of the battery cell is between about 0.4 to about 0.5.

5. The energy storage system as claimed in any one of the preceding claims, wherein the supply port is at a lower position than the second discharge port.

6. The energy storage system as claimed in any one of the preceding claims, further comprising:
a temperature sensor configured to detect a temperature of the battery cell; and
a controller configured to control operations of the supply port, the first discharge port, and the second discharge port based on the temperature of the battery cell.

7. The energy storage system as claimed in claim 6, wherein the controller is configured to open the first discharge port and close the second discharge port based on the temperature of the battery cell being lower than or equal to a first temperature.

8. The energy storage system as claimed in claim 7, wherein the first temperature is about 60 °C or higher and about 70 °C or lower.

9. The energy storage system as claimed in claim 7 or claim 8, wherein the controller is configured to open the second discharge port and close the first discharge port based on the temperature of the battery cell being higher than or equal to a second temperature that is higher than the first temperature.

10. The energy storage system as claimed in claim 9, wherein the second temperature is about 150 °C or higher and about 200 °C or lower.

11. The energy storage system as claimed in any one of claims 6 to 10, further comprising a case vent connected to the case and configured to be opened upon an internal pressure of the case being increased to a threshold pressure or higher.

12. The energy storage system as claimed in claim 11, wherein the controller is configured to open the supply port and close the first discharge port and the second discharge port upon opening of the case vent.

13. The energy storage system as claimed in claim 12, further comprising a pressure sensor configured to detect the internal pressure of the case,
wherein the controller is configured to determine whether the case vent is opened based on the internal pressure of the case.

14. The energy storage system as claimed in claim 12 or claim 13, further comprising a level sensor configured to detect a level of the cooling fluid inside the case,
wherein the controller is configured to adjust a flow rate of the cooling fluid into the case through the supply port based on the level of the cooling fluid.

15. The energy storage system as claimed in claim 14, wherein the controller is configured to adjust the flow rate of the cooling fluid into the case to a first flow rate upon opening of the case vent.
